(19) **Europäisches Patentamt**
**European Patent Office**
**Office européen des brevets**

(11) **EP 1 870 220 B1**

(12) **EUROPEAN PATENT SPECIFICATION**

(45) Date of publication and mention
of the grant of the patent:
**22.11.2017 Bulletin 2017/47**

(51) Int Cl.:
*B29C 47/00* (2006.01)     *C08J 9/12* (2006.01)
*C08L 101/16* (2006.01)    *B29K 67/00* (2006.01)
*B29K 105/04* (2006.01)

(21) Application number: **06729125.2**

(22) Date of filing: **15.03.2006**

(86) International application number:
**PCT/JP2006/305104**

(87) International publication number:
**WO 2006/103928 (05.10.2006 Gazette 2006/40)**

(54) **PROCESS FOR PRODUCING EXTRUDED FOAM OF POLYHYDROXYALKANOATE RESIN AND EXTRUDED FOAM OBTAINED BY THE PROCESS**

VERFAHREN ZUR HERSTELLUNG VON EXTRUDIERTEM SCHAUM AUS POLYHYDROXYALKANOATHARZ UND DURCH DAS VERFAHREN ERHALTENER EXTRUDIERTER SCHAUM

PROCEDE DE FABRICATION DE MOUSSE EXTRUDEE EN RESINE DE POLYHYDROXYALKANOATE ET MOUSSE EXTRUDEE OBTENUE PAR CE PROCEDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.03.2005 JP 2005090864**

(43) Date of publication of application:
**26.12.2007 Bulletin 2007/52**

(73) Proprietors:
• **Kaneka Corporation**
  **Osaka (JP)**
• **Meredian, Inc.**
  **Bainbridge, GA 39817 (US)**

(72) Inventors:
• **HIROSE, Fuminobu**
  **c/o Kaneka Corporation Osaka Plant**
  **Osaka 566-0072 (JP)**

• **SENDA, Kenichi**
  **c/o Kaneka Corporation Osaka Plant**
  **Osaka 566-0072 (JP)**
• **MIYAGAWA, Toshio**
  **c/o Kaneka Corporation Osaka Plant**
  **Osaka 566-0072 (JP)**

(74) Representative: **Vossius & Partner**
**Patentanwälte Rechtsanwälte mbB**
**Siebertstrasse 3**
**81675 München (DE)**

(56) References cited:
**JP-A- 06 156 524      JP-A- 2003 327 737**
**JP-A- 2004 075 122   JP-A- 2004 292 499**
**US-A- 4 324 493**

**Description**

Technical Field

The present invention relates to a method of producing a biodegradable polyhydroxyalkanoate resin extruded foam of vegetable origin, and an extruded foam obtained by the method.

Background Art

Recently, under current circumstances in which environmental issues caused by waste plastics have been focused, biodegradable plastics which are degraded into water and carbon dioxide by the action of a microorganism after disposal thereof have drawn attention. In general, biodegradable plastics are broadly classified into three types of: (1) microbial product-based aliphatic polyester such as polyhydroxyalkanoates (particularly, poly(3-hydroxyalkanoates)); (2) chemically synthesized aliphatic polyesters such as polylactic acid and polycaprolactone; and (3) naturally occurring polymers such as starch and cellulose acetate. Many of the chemically synthesized aliphatic polyesters are not readily degraded in water because they are not anaerobically degraded. Furthermore, polylactic acid and polycaprolactone are inferior in heat resistance. In addition, starch that is a naturally occurring polymer is nonthermoplastic and brittle, and is inferior in water resistance.

In contrast, polyhydroxyalkanoates have excellent characteristics such as: being excellent in degradability under any of aerobic and anaerobic conditions; not generating toxic gas during combustion; being excellent in water resistance and anti-water vapor permeability; capable of having a high molecular weight without a crosslinking treatment or the like; being a plastic produced by microorganisms that assimilates plants; not increasing carbon dioxide on the earth (being carbon neutral). Accordingly, owing to such excellent environmental compatibility, availability of polyhydroxyalkanoate as packaging materials, materials for tableware, materials for construction, civil engineering, agriculture, and horticulture, automobile interior materials, materials for adsorption, carrier and filtration, and the like has been desired.

Plastics have been used in sheets, films, fibers, injection-molded products, foams and the like, however, among these, in connection with foamed plastics which have been used for packaging containers, shock absorbers, cushioning materials and the like in large quantities, solution of waste disposal problems, in particular, has been desired because of bulkiness thereof. Therefore, researches on foamed plastics which exhibit biodegradability have been extensively conducted. Thus far, extruded foams and in-mold formed foams of aliphatic polyester-based resins, mixed resins of starch and plastics and the like have been studied.

Patent Document 1 discloses an extruded foam obtained using a biodegradable aliphatic polyester resin yielded from a raw material of petroleum origin, through allowing a biodegradable aliphatic polyester resin yielded from a raw material of petroleum origin to react with diisocyanate to increase the molecular weight for improving the foamability. Patent Documents 2 to 4 disclose an extruded foam of a polylactic acid-based resin characterized by having a certain melt viscosity through adding a thickening agent or the like. Patent Documents 5 to 10 disclose an extruded foam obtained from a polylactic acid-based resin or an aliphatic-aromatic polyester-based resin having a viscosity appropriately regulated by selecting the type of the foaming agent.

Polyhydroxyalkanoate resin extruded foams of plant material origin having the characteristics as described above have been also studied. Patent Document 11 describes production of an extruded foam using a polyhydroxyalkanoate resin, and a nonhalogen-based foaming agent at a certain melt viscosity. Patent Document 11 discloses that a roam having an expansion ratio of eight times or less can be obtained using poly(3-hydroxybutyrate-co-3-hydroxyhexanoate) as the polyhydroxyalkanoate, and using carbon dioxide gas, dimethyl ether or hydrocarbon as a foaming agent. However, in some cases, it is difficult to produce the polyhydroxyalkanoate resin foam continuously for a long period of time by the method of production disclosed in Patent Document 11.

Moreover, Patent Document 11 does not disclose foams having an expansion ratio exceeding eight times. Furthermore, Patent Document 11 discloses a foam having a high dosed-cell rate, for example, 51%, and the lowest dosed-cell rate being 29%. Depending on the application of the foam, extruded foams having high open-cell rate would be desired. For example, loose shock absorbers which can have any freely changed shape can be obtained by filling the extruded foam having a high open-cell rate, which had been cut to have a predetermined length, into an air-permeable or non-air-permeable pouch (preferably, biodegradable bag). The loose shock absorbers can achieve an excellent performance as cushioning material, shock absorbers which can be inserted into gaps by freely changing the shape, sound absorptive material, and the like. In addition, the extruded foams having a high open-cell rate can be used as drug sustained release control particles by mixing with a sustained release drug.

Patent Document 1: Japanese Unexamined Patent Application Publication No. Hei 10-152572;
Patent Document 2: Japanese Unexamined Patent Application Publication No. 2000-7815;
Patent Document 3: Japanese Unexamined Patent Application Publication No. 2000-7816;

Patent Document 4: Japanese Unexamined Patent Application Publication No. 2003-20355;
Patent Document 5: Japanese Unexamined Patent Application Publication No. 2003-39524;
Patent Document 6: Japanese Unexamined Patent Application Publication No. 2003-103595;
Patent Document 7: Japanese Unexamined Patent Application Publication No. 2003-261704;
Patent Document 8: Japanese Unexamined Patent Application Publication No. 2003-301066;
Patent Document 9: Japanese Unexamined Patent Application Publication No. 2004-58352;
Patent Document 10: Japanese Unexamined Patent Application Publication No. 2004-307662;
Patent Document 11: Japanese Unexamined Patent Application Publication No. 2003-327737.

DISCLOSURE OF THE INVENTION

Problems to be Solved by the Invention

An object of the present invention is to provide a method of producing a biodegradable resin extruded foam which is of vegetable origin and excellent in environmental compatibility, in a stable manner for a long period of time. Other object of the present invention is to provide a method of producing a resin extruded foam which has a high expansion ratio and a high open-cell rate, in a stable manner for a long period of time. Means for Solving the Problems
The present inventors have elaborately investigated for solving the aforementioned problems, and consequently found that addition of a fatty acid amide-based compound and/or liquid paraffin to polyhydroxyalkanoate can suppress crystallization of polyhydroxyalkanoate in an extruder, whereby the polyhydroxyalkanoate extruded foam can be stably produced for a long period of time. Moreover, it was found that a problem of slow crystallization in the polyhydroxyalkanoate resin foam can be improved to achieve increase in expansion ratio, preferably when a volatile foaming agent with high plasticizing ability, e.g., an ether is used, and the resin temperature at the extruder outlet is cooled near to the crystallization temperature of polyhydroxyalkanoate, particularly to around the maximum crystallization temperature. Accordingly, the present invention was accomplished. Specifically, aspects of the present invention are as described below.
(1) A method of producing a P3HA resin extruded foam comprising: melt-kneading a polymer which is produced by a microorganism and includes one or more recurring unit represented by the formula (1):

$$[\text{-O-CHR-CH}_2\text{-CO-}] \qquad (1)$$

wherein R is an alkyl group represented by $C_nH_{2n+1}$, and n is an integer of 1 to 15 (hereinafter, this polymer may be also referred to as poly(3-hydroxyalkanoate) or P3HA), a volatile foaming agent, and a fatty acid amide-based compound and/or liquid paraffin to form a mixture; and extruding the mixture through a molding die into a low pressure region,
wherein the temperature To at which the mixture of P3HA, the volatile foaming agent and the fatty acid amide-based compound and/or liquid paraffin is extruded from the extruder falls within the range represented by the formula (2):

$$Tc - 20 \leq To\ (°C) \leq Tc + 20 \qquad (2)$$

wherein $Tc = (Tg + Tm)/2$; Tg represents a glass transition temperature determined by differential scanning calorimetry of the P3HA; and Tm represents a melting point (Tm) determined by differential scanning calorimetry of the P3HA.
(2) The method of producing a P3HA resin extruded foam according to the above item (1), wherein the P3HA is poly(3-hydroxybutyrate-co-3-hydroxyhexanoate).
(3) The method of producing a P3HA resin extruded foam according to the above item (1) or (2), wherein the P3HA is poly(3-hydroxybutyrate-co-3-hydroxyhexanoate), and the polymer includes the 3-hydroxyhexanoate component in an amount of 1% by mole or more and 20% by mole or less.
(4) The method of producing a P3HA resin extruded foam according to any one of the above items (1) to (3), wherein the volatile foaming agent is one or more selected from the group consisting of dimethyl ether, diethyl ether and methyl ethyl ether.
(5) The method of producing a P3HA resin extruded foam according to any one of the above items (1) to (4), wherein the volatile foaming agent is dimethyl ether.
(6) A P3HA resin extruded foam obtainable by the method of producing an extruded foam according to any one of the above items (1) to (5), wherein the open-cell rate is equal to or greater than 80%.

(7) The P3HA resin extruded foam according to the above item (6), wherein the expansion ratio is greater than 8 times.

Advantages of the Invention

According to the method of production of the present invention, a P3HA extruded foam can be stably produced for a long period of time. Further, a P3HA resin extruded foam can be stably obtained with a high expansion ratio exceeding 8 times, and with a high open-cell rate. Moreover, because a P3HA is used as the resin, a resin extruded foam can be obtained which is excellent in heat resistance and water resistance, and is of vegetable origin and also excellent in environmental compatibility. Additionally, foams are obtained which return to carbon recycling system on the earth through degradation by the action of microorganisms or the like under any of aerobic and anaerobic conditions after disposal thereof.

Best Mode for Carrying Out the Invention

Hereinafter, the present invention will be explained in more details. Poly(3-hydroxyalkanoate) of the present invention may be a homopolymer including one kind of recurring unit represented by the formula (1):

$$[-O-CHR-CH_2-CO-] \qquad (1)$$

Wherein R is an alkyl group represented by $C_nH2_{n+1}$, and n is an integer of from 1 to 15, or a copolymer including two or more kinds of 3-hydroxyalkanoate units.

As the P3HA according to the present invention, homopolymers of 3-hydroxyalkanoate; copolymers constituted with a combination of two or more recurring units, i.e., di-copolymers, tri-copolymers, tetra-copolymers or the like; or a blend including two or more of these polymers may be exemplified. Among them, the homopolymer of 3-hydroxybutyrate in which n is 1, 3-hydroxyvalylate in which n is 2, 3-hydroxyhexanoate in which n is 3, 3-hydroxyoctanoate in which n is 5, or 3-hydroxyoctadecanoate in which n is 15, or a copolymer such as di-copolymers or tri-copolymers including a combination of two or more of these 3-hydroxyalkanoate units, and blends of the same can be preferably used. Furthermore, poly(3-hydroxybutyrate-co-3-hydroxyhexanoate) is preferred which is a copolymer of 3-hydroxybutyrate in which n is 1 and 3-hydroxyhexanoate in which n is 3. In this copolymer, it is particularly preferred that the 3-hydroxyhexanoate unit is included in an amount of 1% by mole or more and 20% by mole or less. When the 3-hydroxyhexanoate is included in the above range, processing at a low temperature is permitted, therefore, lowering of the molecular weight due to thermal degradation during the thermal processing tends to be suppressed. The P3HA of the present invention may have a unit other than the monomer unit represented by the formula (1), but a polymer not having the other monomer unit is used in general.

As the P3HA of the present invention, one produced by a microorganism is used. For example, the poly(3-hydroxybutyrate-co-3-hydroxyhexanoate) can be obtained using as a microorganism Alcaligenes eutrophus AC32 produced by introducing a PHA synthetic enzyme gene, which is derived from Aeromonas caviae, into Alcaligenes eutrophus, according to the method disclosed in J. Bacteriol., 179, 4821 (1997) or the like through appropriately adjusting the raw material and culture conditions.

The lower limit of the weight average molecular weight (Mw) of the aforementioned P3HA is preferably 50,000. When the weight average molecular weight is equal to or greater than 50,000, the melt viscosity required in foaming can be sufficiently secured, and thus stable production of the foam tends to be achieved. The weight average molecular weight referred to herein means a weight average molecular weight (Mw) determined by measuring the molecular weight in terms of polystyrene by gel permeation chromatography (GPC) using a chloroform eluent.

In the present invention, a volatile foaming agent, preferably a volatile foaming agent which has high plasticizing capacity of P3HA is used. In particular, the agent which exhibits environmental compatibility and solubility with P3HA, and exhibits a gaseous state at a room temperature or a temperature of the molding die during the extrusion is preferred. Illustrative examples of the volatile foaming agent include inorganic gases such as carbon dioxide, nitrogen and air, aliphatic saturated hydrocarbons, as well as other foaming agents not including halogen, and the like. These may be used alone, or two or more of them may be used in combination. The volatile foaming agent preferably has high plasticizing capacity, thereby enabling adjustment of the extrusion temperature To to be equal to or higher than Tg and equal to or lower than Tm.

In general, although the inorganic gases have inferior plasticizing capacity of P3HA, plasticization of the resin is enabled even in the case of use of, for example, carbon dioxide, as long as an extruder which can be controlled under a high pressure is employed. In addition, the inorganic gas also serves as a cell size regulator.

Examples of the aliphatic saturated hydrocarbon include saturated hydrocarbons having 3 or more and 4 or less carbon atoms such as propane, n-butane and isobutane, and saturated hydrocarbons having 5 carbon atoms such as n-pentane, isopentane and neopentane, and the like.

Examples of the other foaming agent not including halogen include ethers such as dimethyl ether, diethyl ether, methyl ethyl ether, n-butyl ether, diisopropyl ether, furan, furfural, 2-methylfuran, tetrahydrofuran and tetrahydropyran, ketones such as dimethyl ketone, methyl ethyl ketone, diethyl ketone, methyl n-propyl ketone, methyl n-butyl ketone, methyl 1-butyl ketone, methyl n-amyl ketone, methyl n-hexyl ketone, ethyl n-propyl ketone and ethyl n-butyl ketone, alcohols such as methanol, ethanol, propyl alcohol, i-propyl alcohol, butyl alcohol, i-butyl alcohol and t-butyl alcohol, carboxylate esters such as methyl formate, ethyl formate, propyl formate, butyl formate, amyl formate, methyl propionate and ethyl propionate, and the like. Chemical foaming agents such as azo compounds can be also used as a foaming aid or cell size regulator.

Among these volatile foaming agents, in light of the foamability or the like, dimethyl ether, diethyl ether, methyl ethyl ether are preferred, and among these, dimethyl ether is particularly preferred. Dimethyl ether is accompanied by less environmental burden because neither sulfuroxide nor soot is generated in combustion of the foam of the present invention when incinerated. Use of dimethyl ether is started as a material with significant environmental compatibility, which can be used in a broad range of applications such as diesel automotive fuels, fuels for power generation, alternative fuels to LP gas, and the like.

When the resin temperature (To) at the discharge outlet of the extruder is equal to or higher than the glass transition temperature (Tg), i.e., the crystallization temperature of the P3HA resin, and is equal to or lower than the melting point (Tm), the P3HA resin extruded foam having a high open-cell rate with high expansion ratio can be readily produced. When To falls within the range represented by the formula (2):

$$Tc - 20 \leq To\ (°C) \leq Tc + 20 \qquad (2)$$

wherein Tc = (Tg + Tm)/2,
the P3HA resin extruded foam having a higher open-cell rate with higher expansion ratio can be more readily produced.

Since ethers have a high plasticizing ability and foaming power to P3HA resins, the resin temperature To can be equal to or higher than the glass transition temperature (Tg) of the P3HA resin, and equal to or lower than the melting point (Tm) without difficulty. Also, it is easy to make To fall within the range represented by the formula (2) as required by claim 1. As in the foregoing, when ethers are used as the volatile foaming agent, the foaming temperature can be lowered by several tens of degrees Celsius, whereby foaming at a low temperature of around the crystallization temperature is realized. When the foaming is carried out at a low temperature around the crystallization temperature, P3HA is more quickly hardened than ever before, and a foam having a higher expansion ratio is obtained without contraction through fixation of the cell membrane after the foaming.

The amount of the added foaming agent may vary depending on the plasticizing capacity of the used foaming agent, but is preferably 1 part by weight or more and 100 parts by weight or less, in general, based on 100 parts by weight of P3HA. Also, in the case of use of dimethyl ether, for example, the amount is preferably in the range of 10 parts by weight or more and 30 parts by weight or less based on 100 parts by weight of P3HA. When the amount is less than 10 parts by weight, P3HA cannot be sufficiently plasticized, which may lead to failure in making To decrease to the crystallization temperature of P3HA. To the contrary, use in the amount exceeding 30 parts by weight may sometimes not be economical due to the excessive amount of the gas although the plasticizing capacity would be satisfactory.

In the present invention, in order to prevent solidification by crystallization of the P3HA in the extruder, and to avoid influences on hardening after foaming or promoting the same, a fatty acid amide-based compound and/or liquid paraffin is added to the P3HA.

Examples of the fatty acid amide-based compound include monoamides ($R\text{-}CONH_2$) of saturated fatty acids or unsaturated fatty adds, substituted amides (R-CONH-R') thereof, bisamides (R-CONH-...-NHCO-R'), methylolamides ($R\text{-}CONHCH_2OH$), ester amides (R-CONH-...-OCO-), fatty acid amide-ethylene oxide compounds ($R\text{-}CONH\text{-}(CH_2CH_2O)n\text{-}H$), and the like. In the above chemical formulae, R and R' represent an alkyl group or alkenyl group having 1 to 40 carbon atoms. Specific examples include lauric amide, myristic amide, palmitic amide, stearic amide, behenic amide, oleic amide, erucic amide, ricinoleic amide, N-oleylpalmitamide, N-stearylerucamide and the like, but not limited thereto.

Although grounds for improvement of extrusion stability by the fatty acid amide-based compound or liquid paraffin, and for the absence of inhibition or the promotion of hardening after the foaming are not certain, it is speculated that the action thereof is like an internal or external lubricant inside the extruder. In the extrusion foam molding, there is a cooling cylinder or a die part where appropriate viscosity and crystallization are promoted after adding a foaming agent. It is anticipated that the extrusion stability is improved through preventing adhesion of the crystal nucleus, which is believed to develop at the point, to the extruder by these additives (external lubricating action). Furthermore, P3HA is involved in a problem of slowing of the crystallization, which may lead to impossility of usual extrusion processing, when it is once melted at a high temperature, for example, at a temperature equal to or higher the melting point

Tm + 40°C of the resin. In extrusion foam molding, inner temperature of the extruder can be so high due to heat generation by shearing the macro molecules one another, whereby hardening after the extrusion foaming can be inhibited. Suppression of the heat generation by shearing of the macro molecules (internal lubricating action) by these additives is believed to prevent the inhibition or promote hardening in foaming.

The amount of addition of the used fatty acid amide-based compound or liquid paraffin may vary depending on the type, but it is usually preferred to add 0.01 parts by weight or more and 50 parts by weight or less per 100 parts by weight of the P3HA resin. When the amount of addition is less than 0.01 parts by weight, the effect of stabilizing the extrusion may not be achieved. When the amount is more than 50 parts by weight, inferior dispersion in the resin may be caused, which may lead to failure in obtaining a uniform extruded foam.

To the P3HA in the present invention may be added various additives, in addition to the volatile foaming agent, and the fatty acid amide-based compound and/or liquid paraffin, in the range not to impair required performances of the resulting extruded foams. Exemplary additives may include antioxidants, ultraviolet absorbing agents, colorants such as dyes and pigments, plasticizers, lubricants, crystallization nucleating agents, inorganic fillers, and the like. Among these, the additives which exhibit biodegradability are preferred. Specific examples of the additives include inorganic compounds such as silica, talc, calcium silicate, wollastonite, kaolin, clay, mica, zinc oxide, titanium oxide and silicon oxide, fatty add metal salts such as sodium stearate, magnesium stearate, calcium stearate and barium stearate, and the like, but not limited thereto. Moreover, when regulation of the cell diameter of the foam is needed, a cell regulator may be added. Examples of the cell regulator include inorganic nucleating agents such as talc, silica, calcium silicate, calcium carbonate, aluminum oxide, titanium oxide, diatomaceous earth, clay, sodium bicarbonate, alumina, barium sulfate, bentonite, and the like. The amount of the used cell regulator is preferably 0.005 to 10 parts by weight based on 100 parts by weight of P3HA.

The P3HA resin extruded foam of the present invention is produced by: heating P3HA and the fatty acid amide-based compound and/or liquid paraffin in an extruder to melt (the resin temperature in this step being referred to as heat melting temperature (T1)); injecting a volatile foaming agent into the melted resin; kneading the melted resin and the volatile foaming agent; cooling them to the resin temperature To suited for extrusion foaming to give a highly pressurized mixture; then passing the mixture through a die to perfect extrusion foaming into the low pressure area so as to form a P3HA extruded foam.

The melting temperature (T1) in heating the P3HA to melt is, on the basis of the melting point (Tm) determined by differential scanning calorimetry of P3HA, preferably equal to or lower than Tm + 40°C, more preferably equal to or lower than Tm + 20°C, and particularly preferably equal to or lower than Tm + 10°C. When the melting temperature (T1) is higher than Tm +40°C, decrease in the molecular weight may be promoted due to thermal degradation even though the melt time period is short, whereby attaining a viscosity suitable for foaming tends to be difficult. The resin temperature To at which P3HA is extruded with the foaming agent from the extruder affects the expansion ratio, and the melting temperature (T1) also affects the expansion ratio. In other words, when the resin temperature To is the same, an extruded foam having a high expansion ratio is readily obtained through improved solidification by crystallization in the extrusion foaming due to the effect of P3HA to promote self-crystallization, as the melting temperature (T1) is lower, and is more approximate to the melting point (Tm) or below this point.

Since the melting time period may vary depending on the extrusion capacity per unit time, melting means and the like, it cannot be generally determined. However, it is preferred to select the melting time period from the range of time to allow the P3HA resin, the foaming agent, and the additives to be uniformly dispersed and mixed, and to avoid significant lowering of the molecular weight resulting from the thermal degradation. In addition, the melting means is not particularly limited, and any melting and kneading apparatus commonly used in extrusion foaming may be appropriately selected such as e.g., a screw extruder.

The injection of the foaming agent of the present invention into the extruder can be carried out by a known method. The pressure in injection of the foaming agent is not particularly limited, which is acceptable when it is higher than the inner pressure of the extruder for perfecting the injection into the extruder.

In the method of production of the present invention, the temperature To of the P3HA resin when it is extruded from the extruder is preferably equal to or higher than the glass transition temperature (Tg) of P3HA and equal to or lower than the melting point (Tm), provided that it falls within the temperature range represented by the formula (2). Although the temperature and the pressure of the atmosphere to which the P3HA foam is extruded are not particularly limited, the temperature and the pressure of the atmosphere may be selected appropriately such that the resin temperature To is adjusted to be equal to or higher than the glass transition temperature (Tg) of P3HA and equal to or lower than the melting point (Tm), provided that the temperature falls within the range represented by the formula (2). For example, the atmosphere of ordinary temperature, and atmospheric pressure can be selected. As needed, any of the gas phases and liquid phases in which the temperature is adjusted to be higher or lower than the ordinary temperature, and/or the pressure is regulated to be reduced or compressed to some extent to be lower or higher than the atmospheric pressure can be selected within the limits of claim 1.

The P3HA resin extruded foam produced in such a manner can have an expansion ratio exceeding eight times.

Moreover, the expansion ratio of equal to or greater than twenty times is also available. In addition, the foam having an open-cell rate of equal to or greater than 80%, still further, equal to or greater than 90% can be produced. Such an expansion ratio is preferred in terms of lightweight properties, and economical aspects. Furthermore, such an open-cell rate is preferred in light of the cushioning characteristics, and versatility of the shape. In the P3HA resin extruded foam according to the present invention, the open-cell rate is equal to or greater than 80%.

Examples

The present invention will be explained in more detail by way of illustrative Examples below, but the present invention is not anyhow limited to these Examples. Herein, the following abbreviations are used.

PHBH: poly(3-hydroxybutyrate-co-3-hydroxyhexanoate)
HH rate: molar fraction (mol%) of hydroxyhexanoate in PHBH

In the examples, unless otherwise stated particularly, the term "part" is on the weight basis. Determination of physical properties of the P3HA resin foam particle in each Example was carried out as described below.

<Melting Point Tm, Glass Transition Temperature Tg of P3HA Resin>

Differential scanning calorimetry was carried out according to JIS K-7121. A P3HA resin of about 5 mg used in extrusion foaming was precisely weighed, and the temperature was elevated from -20°C to 200°C at a rate of temperature rise of 10°C/min with a differential scanning calorimeter (manufactured by Seiko Electronics Co., Ltd., SSC5200) to obtain a DSC curve. The temperature at the peak top having the maximum absolute value of the endothermic curve in the DSC curve is defined as the melting point Tm. In the DSC curve, at the part where stepwise change in the base line due to the glass transition is found, the two base lines before and after the change are extended. From these two lines, a center line is drawn that is equally distant in the ordinate axis direction. The temperature at the point where this center line intersects with the curve in the part of the stepwise change due to the glass transition in the DSC curve was defined as Tg.

<Expansion Ratio of P3HA Resin Extruded Foam>

Into a graduated cylinder charged with ethanol at 23°C was submerged the extruded foam (weight: W (g)), which had been left to stand under the condition with a relative humidity of 50%, 23°C and 1 atm for 7 days, using a wire mesh or the like. The volume V ($cm^3$) of the foam was measured by reading the amount of rise of the liquid level of ethanol. The expansion ratio was calculated from the volume V and the density $\rho$($g/cm^3$) of the P3HA resin, according to the following formula:

$$\text{expansion ratio} = V/(W/\rho).$$

<Open-Cell Rate of P3HA Resin Extruded Foam>

The open-cell rate was measured with Multipicnometer (manufactured by Beckmann Japan Co., Ltd.), according to ASTM D-2856.

<Weight Average Molecular Weight (Mw)>

The weight average molecular weight (Mw) in terms of polystyrene was determined by measurement with GPC. The GPC apparatus employed was a CCP&8020 system (manufactured by Tosoh Corporation), with the column GPC K-805L (manufactured by Showa Denko K. K.) at a column temperature of 40°C. 200 $\mu$l of a solution of 20 mg of polyhydroxyalkanoate in 10 ml of chloroform was injected to determine Mw.

<Extrusion Foaming Stability>

The extrusion stability was evaluated in continuous production of the extruded foam under the same operating conditions for two hours, based on the occurrence of a phenomenon of sudden stop due to increase of the burden on the extruder through significant development of crystallization in the extruder.

A: the extruder never stopped in 2 hrs.
C: the extruder stopped once or more times in 2 hrs.

<Biodegradability of P3HA Resin Extruded Foam>

A piece of the P3HA resin extruded foam in size of 50 mm x 50 mm x 5 mm was excised. Six months after burying the piece 10 cm under the ground, change in the shape was observed to evaluate the degradability according to the following standards:

A: substantial part degraded to the extent that the original shape can be hardly observed.

C: almost no change in the shape of the extruded foam observed, showing no degradation.

(Example 1)

PHBH (HH rate: 10% by mole, Mw = 530,000) was produced using as a microorganism Alcaligenes eutrophus AC32 (J. Bacteriol., 179, 4821 (1997)), which had been prepared by introducing a PHA synthase gene derived from Aeromonas caviae into Alcaligenes eutrophus, through appropriately adjusting the raw material and culture conditions. This PHBH in an amount of 100 parts by weight, and 3 parts by weight of lauric amide as a fatty acid amide-based compound were melt-kneaded in an extrusion molding machine having a $\phi$35 mm single screw at a cylinder temperature of 135°C. The mixture was extruded from a small die-opening of 3 mm $\phi$ attached to the extruder tip. Thus extruded strand was cut by a pelletizer to produce PHBH pellets (Mw = 450,000, Tg = 1°C, Tm = 135°C, Tc = 68°C) having a particle weight of 5 mg. The pellets were fed to a two-tiered extruder in which one having a $\phi$65 mm was connected to one having a $\phi$90 mm in series at a rate of about 40 kg/hr. The resin mixture fed to the extruder having a $\phi$65 mm was heated to 135°C (T1), and melt-kneaded. Thereto was added a foaming agent, and the mixture was fed to an extruder having a $\phi$90 mm which had been connected to the extruder having a $\phi$65 mm. The resin was cooled in the extruder having a $\phi$90 mm to the resin temperature To of 78°C (To being between Tg and Tm, satisfying the relationship represented by the formula (2)). The resin was extruded through a nozzle having a rectangular cross section with a size of 1 mm in the thickness direction and 50 mm in the width direction, attached to the tip of the extruder having a $\phi$90 mm into the atmosphere. Accordingly, a slab extruded foam having a thickness of about 10 mm, and a width of about 80 mm was obtained.
In this step, 15 parts of dimethyl ether based on 100 parts by weight of the pellets as a foaming agent was injected into the resin from around the tip of the extruder of $\phi$65 mm. Thus resulting foam had an expansion ratio of 21 times, and an open-cell rate of 98%. Stable state of the extruder was observed during the operation. Further, the resultant foam exhibited favorable biodegradability. The results are shown in Table 1.

(Example 2)

A slab extruded foam having a thickness of about 10 mm, and a width of about 80 mm was obtained in the same manner as in Example 1 except that palmitic amide was used as the fatty acid amide-based compound, and that the resin temperature To in foaming was 79°C (To being between Tg and Tm, satisfying the relationship represented by the formula (2)). Thus resulting foam had an expansion ratio of 19 times, and an open-cell rate of 99%. Stable state of the extruder was observed during the operation. Further, the resultant foam exhibited favorable biodegradability. The results are shown in Table 1.

(Example 3)

A slab extruded foam having a thickness of about 10 mm, and a width of about 80 mm was obtained in the same manner as in Example 1 except that stearic amide was used as the fatty add amide-based compound, and that the resin temperature To in foaming was 78°C (To being between Tg and Tm, satisfying the relationship represented by the formula (2)). Thus resulting foam had an expansion ratio of 20 times, and an open-cell rate of 98%. Stable state of the extruder was observed during the operation. Further, the resultant foam exhibited favorable biodegradability. The results are shown in Table 1.

(Example 4)

A slab extruded foam having a thickness of about 12 mm, and a width of about 85 mm was obtained in the same manner as in Example 1 except that behenic amide was used as the fatty acid amide-based compound, and that the resin temperature To in foaming was 72°C (To being between Tg and Tm, satisfying the relationship represented by the formula (2)). Thus resulting foam had an expansion ratio of 26 times, and an open-cell rate of 99%. Stable state of the extruder was observed during the operation. Further, the resultant foam exhibited favorable biodegradability. The results are shown in Table 1.

(Example 5)

A slab extruded foam having a thickness of about 10 mm, and a width of about 80 mm was obtained in the same manner as in Example 1 except that oleic amide was used as the fatty acid amide-based compound, and that the resin temperature To in foaming was 78°C (To being between Tg and Tm, satisfying the relationship represented by the formula (2)). Thus resulting foam had an expansion ratio of 20 times, and an open-cell rate of 98%. Stable state of the extruder was observed during the operation. Further, the resultant foam exhibited favorable biodegradability. The results are shown in Table 1.

(Example 6)

PHBH (HH rate: 7% by mole, Mw = 720,000) was produced using as a microorganism Alcaligenes eutrophus AC32 (J. Bacteriol., 179, 4821 (1997)), which had been prepared by introducing a PHA synthase gene derived from Aeromonas caviae into Alcaligenes eutrophus, through appropriately adjusting the raw materials and culture conditions. This PHBH in an amount of 100 parts by weight, and 3 parts by weight of erucic amide as a fatty acid amide-based compound were melt-kneaded in an extrusion molding machine having a φ35 mm single screw at a cylinder temperature of 145°C. The mixture was extruded from a small die-opening of 3 mm φ attached to the extruder tip. Thus extruded strand was cut by a pelletizer to produce PHBH pellets (Mw = 570,000, Tg = 1°C, Tm = 145°C, Tc = 73°C) having a particle weight of 5 mg. The pellets were fed to a two-tiered extruder in which one having a φ65 mm was connected to one having a φ90 mm in series at a rate of about 40 kg/hr. The resin mixture fed to the extruder having the φ65 mm was heated to 145°C (T1), and melt-kneaded. Thereto was added a foaming agent, and the mixture was fed to an extruder having a φ90 mm which had been connected to the extruder having a φ65 mm. The resin was cooled in the extruder having a φ90 mm to the resin temperature To of 73°C (To being between Tg and Tm, satisfying the relationship represented by the formula (2)). The resin was extruded through a nozzle having a rectangular cross section with a size of 1 mm in the thickness direction and 50 mm in the width direction, attached to the tip of the extruder having a φ90 mm into the atmosphere. Accordingly, a slab extruded foam having a thickness of about 12 mm, and a width of about 85 mm was obtained.

In this step, 17 parts of dimethyl ether based on 100 parts of PHBH as a foaming agent was injected into the resin from around the tip of the extruder having a φ65 mm. Thus resulting foam had an expansion ratio of 31 times, and an open-cell rate of 99%. Stable state of the extruder was observed during the operation. Further, the resultant foam exhibited favorable biodegradability. The results are shown in Table 1.

(Example 7)

A slab extruded foam having a thickness of about 12 mm, and a width of about 85 mm was obtained in the same manner as in Example 6 except that ricinoleic amide was used as the fatty acid amide-based compound, and that the resin temperature To in foaming was 74°C (To being between Tg and Tm, satisfying the relationship represented by the formula (2)). Thus resulting foam had an expansion ratio of 28 times, and an open-cell rate of 99%. Stable state of the extruder was observed during the operation. Further, the resultant foam exhibited favorable biodegradability. The results are shown in Table 1.

(Example 8)

A slab extruded foam having a thickness of about 12 mm, and a width of about 85 mm was obtained in the same manner as in Example 6 except that N-stearylerucic amide was used as the fatty acid amide-based compound, and that the resin temperature To in foaming was 74°C (To being between Tg and Tm, satisfying the relationship represented by the formula (2)). Thus resulting foam had an expansion ratio of 28 times, and an open-cell rate of 99%. Stable state of the extruder was observed during the operation. Further, the resultant foam exhibited favorable biodegradability. The results are shown in Table 1.

(Example 9)

Pellets were produced in the same manner as in Example 6 except that 2 parts by weight of behenic amide was used as the fatty acid amide-based compound. A slab extruded foam having a thickness of about 12 mm, and a width of about 85 mm was obtained in the same manner as in Example 6 except that a dry blend of the pellets to which 0.1 parts by weight of liquid paraffin was further added based on 100 parts by weight of the pellet was fed to the two-tiered extruder, and that the resin temperature To in foaming was 75°C (To being between Tg and Tm, satisfying the relationship represented by the formula (2)). Thus resulting foam had an expansion ratio of 27 times, and an open-cell rate of 99%. Stable state of the extruder was observed during the operation. Further, the resultant foam exhibited favorable biodegradability. The results are shown in Table 1.

(Example 10)

A slab extruded foam having a thickness of about 12 mm, and a width of about 85 mm was obtained in the same manner as in Example 9 except that a dry blend including 0.5 parts by weight of liquid paraffin was fed to the two-tiered extruder, and that the resin temperature To in foaming was 74°C (To being between Tg and Tm, satisfying the relationship represented by the formula (2)). Thus resulting foam had an expansion ratio of 29 times, and an open-cell rate of 99%. Stable state of the extruder was observed during the operation. Further, the resultant foam exhibited favorable biodegradability. The results are shown in Table 1.

(Comparative Example 1)

Foaming was attempted in the same manner as in Example 1 except that the fatty add amide-based compound was not employed. As a result, although similar foam to that in Example 1 was obtained, the die was gradually clogged in about one hour after starting the extrusion under the aforementioned conditions. Thereafter, the operation of the extruder stopped due to sudden change of the internal pressure of the extruder. Accordingly, stable extrusion foaming could not be accomplished.

(Comparative Example 2)

Foaming was attempted in the same manner as in Example 6 except that the fatty acid amide-based compound was not employed. As a result, although a foam having an expansion ratio of 29 times, and an open-cell rate of 99% was obtained, the die was gradually dogged in about 30 min after starting the extrusion under the aforementioned conditions. Thereafter, the operation of the extruder stopped due to sudden change of the Internal pressure of the extruder. Accordingly, stable extrusion foaming could not be accomplished.

[Table 1]

| | | Ex.1 | Ex. 2 | Ex. 3 | Ex. 4 | Ex. 5 | Ex. 6 | Ex. 7 | Ex. 8 | Ex. 9 | Ex. 10 | Compar. Ex. 1 | Compar. Ex. 2 |
|---|---|---|---|---|---|---|---|---|---|---|---|---|---|
| HH rate | % | 10 | 10 | 10 | 10 | 10 | 7 | 7 | 7 | 7 | 7 | 10 | 7 |
| Mw | X 10000 | 45 | 45 | 45 | 45 | 45 | 57 | 57 | 57 | 57 | 57 | 45 | 57 |
| Tm | °C | 135 | 135 | 135 | 135 | 135 | 145 | 145 | 145 | 145 | 145 | 135 | 145 |
| Tg | °C | 1 | 1 | 1 | 1 | 1 | 1 | 1 | 1 | 1 | 1 | 1 | 1 |
| Tc | °C | 68 | 68 | 68 | 68 | 68 | 73 | 73 | 73 | 73 | 73 | 68 | 73 |
| Tc + 20 | °C | 88 | 88 | 88 | 88 | 88 | 93 | 93 | 93 | 93 | 93 | 88 | 93 |
| Tc - 20 | °C | 48 | 48 | 48 | 48 | 48 | 53 | 53 | 53 | 53 | 53 | 48 | 53 |
| To | °C | 78 | 79 | 78 | 72 | 78 | 73 | 74 | 74 | 75 | 74 | 78 | 73 |
| Dimethyl ether | part | 15 | 15 | 15 | 15 | 15 | 17 | 17 | 17 | 17 | 17 | 15 | 17 |
| Lauric amide | part | 3 | | | | | | | | | | | |
| Palmitic amide | part | | 3 | | | | | | | | | | |
| Stearic amide | part | | | 3 | | | | | | | | | |
| Behenic amide | part | | | | 3 | | | | | 2 | 2 | | |
| Oleic amide | part | | | | | 3 | | | | | | | |
| Erucic amide | part | | | | | | 3 | | | | | | |
| Rioinoleic amide | part | | | | | | | 3 | | | | | |
| N-stearylerucic amide | part | | | | | | | | 3 | | | | |
| Liquid paraffin | part | | | | | | | | | 0.1 | 0.5 | | |
| Expansion ratio | time | 21 | 19 | 20 | 26 | 20 | 31 | 28 | 28 | 27 | 29 | 20 | 29 |
| Open-cell rate | % | 98 | 99 | 98 | 99 | 98 | 99 | 99 | 99 | 99 | 99 | 98 | 99 |
| Extrusion stability | | A | A | A | A | A | A | A | A | A | A | C | C |
| Biodegradability | | A | A | A | A | A | A | A | A | A | A | A | A |

EP 1 870 220 B1

Industrial Applicability

As in the foregoing, according to the method of production of the present invention, a P3HA resin extruded foam can be stably obtained. Further, a P3HA resin extruded foam having a high open-cell rate can be stably obtained with a high expansion ratio exceeding 8 times. Furthermore, since P3HA is employed as the resin, a resin extruded foam which is excellent in heat resistance and water resistance, and which is of vegetable origin and also excellent in environmental compatibility can be obtained. Additionally, foams can be obtained which return to carbon recycling system on the earth through degradation by the action of a microorganism or the like under any of aerobic and anaerobic conditions after disposal.

## Claims

1.  A method of producing a P3HA resin extruded foam comprising: melt-kneading a polymer which is produced by a microorganism and includes one or more recurring unit represented by the formula (1):

$$[-O-CHR-CH_2-CO-] \qquad (1)$$

wherein R is an alkyl group represented by $C_nH_{2n+1}$, and n is an integer of 1 to 15 (hereinafter, this polymer may be also referred to as poly(3-hydroxyalkanoate) or P3HA), a volatile foaming agent, and a fatty acid amide-based compound and/or liquid paraffin to form a mixture; and extruding the mixture through a molding die into a low pressure region;
wherein the temperature To (temperature of the resin measured at the extruder discharge outlet with a thermocouple) at which the mixture of P3HA, the volatile foaming agent and the fatty acid amide-based compound and/or liquid paraffin is extruded from the extruder falls within the range represented by the formula (2):

$$Tc - 20 \leq To \ (°C) \leq Tc + 20 \qquad (2)$$

wherein Tc = (Tg + Tm)/2; Tg represents a glass transition temperature determined by differential scanning calorimetry of the P3HA; and Tm represents a melting point (Tm) determined by differential scanning calorimetry of the P3HA.

2.  The method of producing the P3HA resin extruded foam according to claim 1, wherein the P3HA is poly(3-hydroxybutyrate-co-3-hydroxyhexanoate).

3.  The method of producing the P3HA resin extruded foam according to claim 1 or 2, wherein the P3HA is poly(3-hydroxybutyrate-co-3-hydroxyhexanoate), and the polymer includes the 3-hydroxyhexanoate component in an amount of 1% by mole or more and 20% by mole or less.

4.  The method of producing the P3HA resin extruded foam according to any one of claims 1 to 3, wherein the volatile foaming agent is one or more selected from the group consisting of dimethyl ether, diethyl ether and methyl ethyl ether.

5.  The method of producing the P3HA resin extruded foam according to any one of claims 1 to 4, wherein the volatile foaming agent is dimethyl ether.

6.  A P3HA resin extruded foam obtainable by the method of producing the extruded foam according to any one of claims 1 to 5, wherein the open-cell rate is equal to or greater than 80%.

7.  The P3HA resin extruded foam according to claim 6, wherein the expansion ratio is greater than 8 times.

## Patentansprüche

1.  Ein Verfahren zur Herstellung eines aus P3HA-Harz extrudierten Schaums, umfassend: Schmelzkneten eines Polymers, welches durch einen Mikroorganismus hergestellt ist und eine oder mehrere wiederkehrende Einheiten enthält, die durch die Formel (1) dargestellt sind:

[-O-CHR-CH$_2$-CO-]    (1)

wobei R eine Alkylgruppe, dargestellt durch C$_n$H$_{2n+1}$, ist und n eine ganze Zahl von 1 bis 15 ist (nachstehend wird dieses Polymer auch als Poly(3-hydroxyalkanoat) oder P3HA bezeichnet), eines flüchtigen Schäumungsmittels und einer Verbindung auf der Basis eines Fettsäureamids und/oder flüssigen Paraffins, um ein Gemisch zu bilden; und Extrudieren des Gemisches durch ein Formwerkzeug in einen Bereich von niedrigem Druck;

wobei die Temperatur To (Temperatur des Harzes, gemessen an der Auslassöffnung des Extruders mit einem Thermoelement), bei dem das Gemisch von P3HA, flüchtigem Schäumungsmittel und der Verbindung auf Basis eines Fettsäureamids und/oder flüssigen Paraffins aus dem Extruder extrudiert wird, innerhalb des Bereichs, dargestellt durch die Formel (2), liegt:

$$Tc - 20 \leq To\ (°C) \leq Tc + 20 \qquad (2)$$

wobei Tc = (Tg + Tm)/2; Tg eine Glasübergangstemperatur darstellt, bestimmt durch Differentialscanningkalorimetrie des P3HA; und Tm einen Schmelzpunkt (Tm) darstellt, bestimmt durch Differentialscanningkalorimetrie des P3HA.

2. Das Verfahren zur Herstellung des aus P3HA-Harz extrudierten Schaums gemäß Anspruch 1, wobei das P3HA Poly(3-hydroxybutyrat-co-3-hydroxyhexanoat) ist.

3. Das Verfahren zur Herstellung des aus P3HA-Harz extrudierten Schaums gemäß Anspruch 1 oder 2, wobei das P3HA Poly(3-hydroxybutyrat-co-3-hydroxyhexanoat) ist, und das Polymer die 3-Hydroxyhexanoat-Komponente in einer Menge von 1 Mol-% oder mehr und 20 Mol-% oder weniger enthält.

4. Das Verfahren zur Herstellung des aus P3HA-Harz extrudierten Schaums gemäß einem der Ansprüche 1 bis 3, wobei das flüchtige Schäumungsmittel eines oder mehrere, ausgewählt aus der Gruppe bestehend aus Dimethylether, Diethylether und Methylethylether, ist.

5. Das Verfahren zur Herstellung des aus P3HA-Harz extrudierten Schaums gemäß einem der Ansprüche 1 bis 4, wobei das flüchtige Schäumungsmittel Dimethylether ist.

6. Ein aus P3HA-Harz extrudierter Schaum, erhältlich durch das Verfahren zur Herstellung des extrudierten Schaums gemäß einem der Ansprüche 1 bis 5, wobei der offenzellige Anteil gleich oder größer als 80% ist.

7. Der aus P3HA-Harz extrudierte Schaum gemäß Anspruch 6, wobei das Ausdehnungsverhältnis mehr als das 8-fache beträgt.

**Revendications**

1. Méthode de production d'une mousse extrudée de résine de P3HA comprenant :

le malaxage par voie fondue d'un polymère qui est produit par un micro-organisme et comprend un ou plusieurs motifs répétitifs représentés par la formule (1) :

[-O-CHR-CH$_2$-CO-]    (1)

dans laquelle R est un groupe alkyle représenté par C$_n$H$_{2n+1}$ et n est un nombre entier de 1 à 15 (ci-après ce polymère peut être également nommé poly(3-hydroxyalcanoate) ou P3HA), un agent moussant volatil et un composé à base d'amide d'acide gras et/ou de paraffine liquide pour former un mélange ; et l'extrusion du mélange par le biais d'une filière de moulage dans une région de basse pression ;

dans laquelle la température To (température de la résine mesurée à la sortie de décharge de l'extrudeuse avec un thermocouple) à laquelle le mélange de P3HA, de l'agent moussant volatil et du composé à base d'amide d'acide gras et/ou de paraffine liquide est extrudé à partir de l'extrudeuse est comprise dans la plage représentée par la formule (2) :

$$Tc - 20 \leq To \ (°C) \leq Tc + 20 \qquad (2)$$

où Tc = (Tg + Tm)/2 ; Tg représente une température de transition vitreuse déterminée par calorimétrie à balayage différentiel du P3HA ; et Tm représente un point de fusion (Tm) déterminé par calorimétrie à balayage différentiel du P3HA.

2. Méthode de production de la mousse extrudée de résine de P3HA selon la revendication 1, dans laquelle le P3HA est le poly(3-hydroxybutyrate-co-3-hydroxyhexanoate).

3. Méthode de production de la mousse extrudée de résine de P3HA selon la revendication 1 ou 2, dans laquelle le P3HA est le poly(3-hydroxybutyrate-co-3-hydroxyhexanoate) et le polymère comprend le composant 3-hydroxyhexanoate en une quantité de 1 % en moles ou plus et de 20 % en moles ou moins.

4. Méthode de production de la mousse extrudée de résine de P3HA selon l'une quelconque des revendications 1 à 3, dans laquelle l'agent moussant volatil est un ou plusieurs éléments choisis dans le groupe constitué par l'éther diméthylique, l'éther diéthylique et l'éther méthyléthylique.

5. Méthode de production de la mousse extrudée de résine de P3HA selon l'une quelconque des revendications 1 à 4, dans laquelle l'agent moussant volatil est l'éther diméthylique.

6. Mousse extrudée de résine de P3HA pouvant être obtenue par la méthode de production de la mousse extrudée selon l'une quelconque des revendications 1 à 5, dans laquelle le taux d'alvéoles ouvertes est supérieur ou égal à 80 %.

7. Mousse extrudée de résine de P3HA selon la revendication 6, dans laquelle le rapport d'expansion est supérieur à 8 fois.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10152572 B
- JP 2000007815 A
- JP 2000007816 A
- JP 2003020355 A
- JP 2003039524 A
- JP 2003103595 A
- JP 2003261704 A
- JP 2003301066 A
- JP 2004058352 A
- JP 2004307662 A
- JP 2003327737 A

**Non-patent literature cited in the description**

- *J. Bacteriol.,* 1997, vol. 179, 4821